# EUROPÄISCHE PATENTSCHRIFT

(11) **EP 1 101 004 B1**
(45) Veröffentlichungstag und Bekanntmachung des Hinweises auf die Patenterteilung: **19.05.2004**
(21) Anmeldenummer: 00910844.0
(22) Anmeldetag: 16.03.2000
(51) Int. Cl.: E05B 9/08, E05D 5/02

(54) **KLEMMBÜGELBEFESTIGUNG ZUR MONTAGE VON SCHARNIEREN, VERSCHLÜSSEN ODER DGL., BAUTEILEN IN EINER DÜNNEN WAND**
CLAMPING BRACKET FASTENING FOR MOUNTING HINGES, LOCKS OR SIMILAR COMPONENTS ONTO A THIN WALL
FIXATION A ETRIER DE SERRAGE UTILISEE POUR MONTER DES CHARNIERES, DES VERROUS OU DES STRUCTURES SEMBLABLES DANS UNE PAROI MINCE

(30) Priorität: 26.05.1999 DE 29909182 U
(43) Veröffentlichungstag der Anmeldung: 23.05.2001
(73) Patentinhaber: Ramsauer, Dieter, D-42555 Velbert (DE)
(72) Erfinder: Ramsauer, Dieter, D-42555 Velbert (DE)
(74) Vertreter: Stratmann, Ernst, Dr.-Ing.
(86) Internationale Anmeldenummer: PCT/EP2000/002317
(87) Internationale Veröffentlichungsnummer: WO 2000/073605

(56) Entgegenhaltungen:
- DE-A- 2 012 163
- DE-A- 2 157 961
- DE-A- 2 249 693
- DE-A- 2 700 100
- US-A- 4 080 080
- US-A- 4 693 503
- US-A- 5 385 323

## Beschreibung

### Hintergrund der Erfindung

Die Erfindung betrifft eine Klemmbügelbefestigung zur Montage von Scharnieren, Verschlüssen od. dgl. Bauteilen in einer dünner Wand, wie Blechschranktür oder - gehäuse, wobei von dem zu befestigenden Bauteil ein Vorsprung ausgeht, der einen in der dünnen Wand gebildeten Durchbruch durchragt, welcher Vorsprung von einem auf zwei sich gegenüberliegenden Randbereichen des Durchbruchs sich abstützenden Bügel umgriffen ist, wobei der Bügel *einen im wesentlichen rechteckigen Umfang aufweist und* mittels einer Klemmschraube in Richtung auf den Vorsprung gezogen wird.

### Kurze Beschreibung des Standes der Technik

Eine derartige Klemmbügelbefestigung ist beispielsweise aus einem Prospekt der Fa. Southco, Inc., bekannt, das die Bezeichnung "Adjustable Lever Latch" trägt. Hingewiesen sei auch auf die US-4 693 503. Nachteilig bei dieser bekannten Klemmbügelbefestigungen ist, daß sie noch eine verhältnismäßig umständliche Handhabung erfordern und insbesondere keine Blindmontage ermöglichen. So muß zunächst von der einen Seite das Bauteil, wie beispielsweise ein einstellbarer Schwenkhebelverschluß, wie er in dem genannten Prospektblatt oder der US-Patentschrift beschrieben wird, von einer Seite durch einen entsprechenden rechteckigen Durchbruch in einem Türblatt mit seinem die wesentlichen Verriegelungsteile umfassenden Vorsprüngen hindurchgeschoben werden, bis er mit seinem Flanschrand auf der Außenfläche des Türblattes aufliegt, worauf dann von der Innenseite des Türblattes her auf den hindurchragenden Vorsprung des Verschlusses ein Montagebügel aufgeschoben wird, bis dieser auf der Innenfläche des Türblattes aufliegt. Anschließend wird ein Schraubbolzen durch einen im Steg des Montagebügels angeordneten Durchbruch hindurchgesteckt und in eine Bohrung innerhalb des Vorsprungs des Verschlusses eingeschraubt, und zwar so weit, daß der Klemmbügel sich mit seinen Schenkelenden auf die Innenfläche des Türblattes legt und der Verschluß mit seinem Flansch auf die Außenfläche des Türblattes gedrückt und dieses dadurch eingeklemmt wird.

*Aus den Druckschriften DE 20 12 163 A, DE 22 49 693 A, DE 27 00100 A und DE 21* 57 961 A ist jeweils eine Blindbefestigung für Beschlagteile an Hohlprofilen bekannt, bestehend aus einem zweiteiligen Spreizdübel mit Zugschraube, der in *Ausgangsstellung durch eine Befestigungsbohrung "blind" hindurchgesteckt werden kann. Ein konischer, von der Zugschraube durchsetzter erster Teil wird beim anschließenden Anziehen der Schraube in das mit Axialschlitzen versehene zweite Teil gezogen und spreizt zwischen den Schlitzen gebildete Zungen soweit auf, daß sich deren freie Enden auf den unzugänglichen inneren Randbereich der Bohrung legen und zusammen mit einem Kopfteil des ersten Teils oder der Zugschraube oder dem Beschlag die Profilwand einklemmen.*

*Diese Befestigung ergibt keine eigenständige Drehsicherung,* so *daß stets zwei Befestigungspunkte vorhanden sein müssen, bei der DE 2012163, DE 21579 961 und* der DE 27 00 100 verteilt auf die beiden Teile eines Schamiers, bei der DE 22 49 693 hat sogar jedes Schamierteil zwei derartige Befestigungspunkte.

### Aufgabe der Erfindung

Aufgabe der Erfindung ist es, die bekannte, *eigenständig drehgesicherte* Klemmbügelbefestigung dahingehend weiterzubilden, daß die Montage vereinfacht und insbesondere auch eine Blindmontage ermöglicht wird.

### Lösungswege

Gelöst wird die Aufgabe dadurch, daß der den Durchbruch nach innen durchragende Teil des Bauteils auf zwei sich gegenüberliegenden, vom Bügel mit seinen Schenkeln umgriffenen Flächen jeweils einen das zugehörige Bügelende aufnehmenden Rücksprung bildet, der in Richtung auf das Bauteil über eine Schrägfläche in eine an der Durchbruchleibung anliegende Fläche übergeht, die annähernd zur Außenfläche des Bügelschenkels des im Rücksprung liegenden Bügels fluchtet.

Durch diese Ausbildung wird es möglich, den Vorsprung einschließlich vormontiertem Bügel durch den Durchbruch von außen nach innen hindurchzuschieben, woraufhin nur noch die Klemmschraube angezogen zu werden braucht, woraufhin die Schenkel des Bügels unter Aufspreizung durch die Schrägflächen gegen die Innenfläche des Türblattes bewegt werden, bis der gewünschte Klemmkontakt zwischen den Schenkelenden des Klemmbügels auf der Innenseite des Türblattes einerseits und der Flanschfläche des Bauteils auf der Außenseite des Türblatts gegeben ist.

Diese Montageart ist viel einfacher als die beim Stand der Technik, desweiteren wird es möglich, das Bauteil "blind" zu befestigen, d.h., eine Befestigung zu ermöglichen, ohne daß die Hinterseite eines Türblattes oder Gehäuses oder dgl. zugänglich ist. In diesem Falle muß allerdings entweder die Klemmschraube von der Vorderseite her zugänglich sein, so daß sie angezogen werden kann, oder durch andere Maßnahmen (wie ein geeigneter Durchbruch) ein Anziehen der Klemmschraube auch von hinten oder sonstwie sichergestellt werden.

Gemäß einer Weiterbildung der Erfindung weist die an der Durchbruchleibung anliegende Fläche des Bügelschenkels senkrecht zur Wandebene eine Erstreckung auf, die annähernd der Stärke der dünnen Wand entspricht. Dies ergibt eine besonders satte Einpassung zwischen Bauteil und Durchbruch.

Aus dem gleichen Grund ist es günstig, wenn gemäß einer noch anderen Weiterbildung der Erfindung das Bauteil eine an der Außenfläche der dünnen Wand anliegende Flanschfläche bildet, von der der Vorsprung ausgeht. Die Flanschfläche ermöglicht auch ein sicheres Ableiten der Klemmkräfte und erlaubt auch die Einbringung einer Blattdichtung.

Der Vorsprung des Bauteils kann einfach ein Befestigungsvorsprung sein, der speziell für diesen Zweck vorgesehen ist, alternativ kann aber der Vorsprung auch Funktionsteile eines Verschlusses enthalten.

Gemäß einer noch anderen Weiterbildung der Erfindung gehen von den Stimflächen der Bügelschenkel Zähne oder Spitzen aus, die sich in das Material der Innenfläche der dünnen Wand eingraben. Dies kann z.B. dazu dienen, einen aus Metall bestehenden Verschluß an dem Türblatt, das aus Metall besteht, zu erden, um so eine Gefährdung des Benutzers gegenüber von der Innenseite des Schrankes her drohende Spannungsverschleppungen zu unterbinden.

Bei langgestreckten Bauteilen, wie beispielsweise bei versenkbaren Schwenkhebelverschlüssen, kann es von Vorteil sein, zwei oder auch mehr separate oder durch einen Steg einstückig miteinander verbundene Bügel aufweisende Klemmbügelbefestigungen vorzusehen, die das langgestreckte Gehäuse an zwei oder mehr Stellen umgreifen und dadurch eine stabilere Montage ermöglichen.

Gemäß einer noch anderen Weiterbildung der Erfindung kann der Bügel die Form einer Kappe aufweisen, der den Vorsprung derart umgreift, daß zwei sich gegenüberliegende Seitenwände der Kappe an ihren Stirnflächen Zahnungen derart aufweisen, daß diese sich auf den Randbereich des Durchbruchs legen, der eine längere Erstreckung aufweist wie die Erstreckung des Vorsprungs, wobei durch Druckkontakt eine gegenseitige Verschiebung zwischen Bügel bzw. Vorsprung einerseits und der dünnen Wand andererseits nicht zugelassen wird, diese aber bei Lockerung des Kontaktes ermöglicht wird.

Insbesondere bei einer Befestigung von Scharnierteilen sollte eine Einstellbarkeit ermöglicht werden. Diese Einstellbarkeit wird auf eine bestimmte Richtung beschränkt, wenn gemäß einer noch anderen Weiterbildung der Erfindung senkrecht zu den mit Spitzen versehenen Seitenwände Haltewände vorgesehen sind, die eine Verschiebung der Kappe bezüglich des Vorsprungs in einer quer zu seiner längeren Erstreckung liegenden Richtung unterbinden. Bei Scharnierteilen ist es insbesondere günstig, wenn gemäß einer noch anderen Ausführungsform der Erfindung das Bauteil ein Scharnierteil ist und die durch Kontaktlockerung mögliche Verschiebung parallel oder senkrecht zur Scharnierachse verläuft.

Die Klemmschraube läßt sich prinzipiell auf zwei unterschiedliche Weisen anordnen. Zum einen kann der Bügel in seinem Stegbereich eine Durchgangsbohrung und das Bauteil eine Gewindebohrung für die Klemmschraube aufweisen, in welchem Falle die Klemmschraube von der Türblatthinterseite angezogen wird. Ist alternativ der Bügel mit einer Gewindebohrung oder das Bauteil mit einer Durchgangsbohrung für die Klemmschraube versehen, ergibt sich eine Betätigung der Klemmschraube von der Vorderseite des Türblatts, was insbesondere bei Blindbefestigung von Vorteil ist.

Soll auf einem Rohr ein Bauteil befestigt werden, läßt sich die erfindungsgemäße Konstruktion ebenfalls verwenden, indem hier insbesondere die Möglichkeit der Blindbefestigung von Vorteil ist, weil üblicherweise das Rohrinnere schlecht zugänglich ist. Gibt man dem Rohr einen Durchbruch gegenüberliegend zu der Vorsprungsachse, läßt sich sogar eine Anordnung verklemmen, bei der die Schraube nach innen weist.

### Kurze Beschreibung der Zeichnungen

Die Erfindung wird anhand von Ausführungsbeispielen näher erläutert, die in den Figuren dargestellt sind.

Es zeigt:
- **Fig. 1**: eine axiale, teilweise geschnittene Ansicht auf eine erfindungsgemäß ausgestaltete Klemmbügelbefestigung zur Montage eines Scharniers an einem Blechschrank;
- **Fig. 2**: eine Ansicht von hinten (oben) auf die Anordnung gemäß Fig. 1;
- **Fig. 3**: eine Ansicht ähnlich der Fig. 2, jedoch mit abgenommener Befestigungsschraube und abgenommenem Bügel;
- **Fig. 4**: eine Klemmbügelbefestigung gemäß dem Stand der Technik;
- **Fig. 5**: in einer Ansicht ähnlich der Fig. 1 eine verstellbare Klemmbügelbefestigung gemäß einer weiteren Ausführungsform der Erfindung;
- **Fig. 6**: in einer Seitenansicht eine Klemmbügelbefestigung zur Montage eines Verschlusses;
- **Fig. 7**: eine Ansicht von links auf den Verschluß gemäß Fig. 6;
- **Fig. 8**: eine Ansicht von rechts auf den Verschluß, vor der Klemmung;
- **Fig. 9**: einen durch Zahnung einstellbaren Klemmbügel;
- **Fig. 10**: eine Seitenansicht des Bauteils gemäß Fig. 9;
- **Fig. 11**: in einer Seitenansicht einen mittels der erfindungsgemäßen Klemmbügelbefestigung in einem Blechschrank angeordneten Verschluß;
- **Fig. 12**: eine Ansicht von rechts auf den Verschluß gemäß Fig. 11;
- **Fig. 13**: eine "blind" einsetzbare Klemmbügelbefestigung;
- **Fig. 14**: eine Klemmbügelbefestigung zum Einsatz bei einer rohrförmig gebogenen dünnen Wand.

### Beste Wege der Ausführung der Erfindung

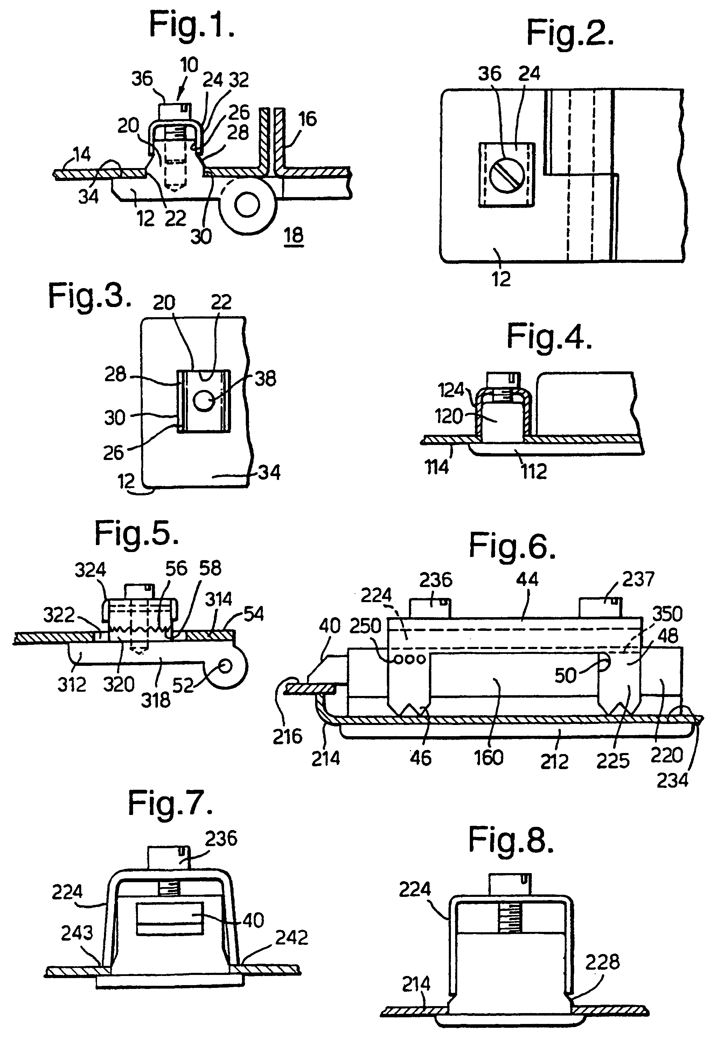

In Fig. 1 ist eine Klemmbügelbefestigung 10 hier zur Montage eines Scharnierteils 12 in einer dünnen Wand 14 zu erkennen, wobei die dünne Wand 14 hier beispielsweise ein Türblatt darstellt, das an einem Blechschrank oder Gehäuse 16 mittels eines Scharniers 18 angeschlagen ist, von dem das Scharnierteil 12 ein Teil ist. Das an dem Türblatt 14 zu befestigende Bauteil 12, hier das Scharnierteil 12, besitzt einen Vorsprung 20, der einen in der dünnen Wand 14 gebildeten Durchbruch 22 durchragt, der gemäß Fig. 3 im wesentlichen rechteckigen Querschnitt aufweist. Desweiteren ist ein Bügel 24 zu erkennen, der im wesentlichen U-Form hat und mit seinen beiden U-Form-Schenkeln den Vorsprung 20 umgreift.

Die prismatische (nicht-runde) Form des Durchbruchs ergibt eine erwünschte Drehsicherung des Bauteils 12 in dem Durchbruch 22, so daß man prinzipiell mit nur einem Befestigungsmittel auskommt.

Der den Durchbruch 22 durchragende Teil 20 des Bauteils, hier das Scharnierteil 12, bildet auf zwei sich gegenüberliegenden, vom Bügel umgriffenen Flächen 26 jeweils einen das zugehörige Ende des Bügels aufnehmenden Rücksprung, der in Richtung auf das Bauteil 12 über eine Schrägfläche 28 in eine an der Leibung des Durchbruches 22 anliegenden Fläche 30 übergeht, die annähernd zur Außenfläche 32 des Schenkels des Bügels 24 fluchtet, solange dieser im Rücksprung 26 liegt. Die Breite der innerhalb der Leibung des Durchbruches 22 liegende Fläche des Vorsprungs 20 ist annähernd gleich der Stärke der dünnen Wand 14, so daß die Schrägung etwa mit Austreten des Vorsprungs 20 aus der Durchbruchleibung 22 beginnt. Wie weiter zu erkennen ist, bildet das Bauteil 12, hier in Form eines Scharnierteils, eine an der Außenfläche der dünnen Wand 14 anliegende Flanschfläche 34, von der der Vorsprung 20 ausgeht. Mit Hilfe einer Klemmschraube 36 ist es nun möglich, den Bügel 14 in Richtung auf den Vorsprung 20 zu verschieben, bei welcher Bewegung die Enden der Schenkel des Bügels 20 aus der zurückspringenden Fläche heraus auf die Schrägfläche gleiten, wobei die beiden Schenkel auseinandergebogen werden, bis schließlich die Stirnflächen der beiden Schenkel des Bügels 24 auf zwei sich gegenüberliegenden Randbereichen des Durchbruches auftreffen und sich dann der Bügel 24 dort abstützen kann. Dabei wird das Bauteil 12 mit seiner Flanschfläche 34 gegen die Außenfläche des Türblattes bzw. der dünnen Wand 14 gepreßt und dadurch an dieser Wand festgehalten.

Dadurch, daß zunächst die Schenkel des Bügels 24 in zurückspringenden Bereichen der Seiten des Vorsprungs 20 aufgenommen sind, derart, daß die Außenflächen der Bügelschenkel nicht über die später an der Durchbruchleibung anliegende Fläche des Vorsprunges 20 hinausreichen, kann der Vorsprung einschließlich Bügel und Schraube von außen durch den Durchbruch 20 hindurchgeschoben werden. Erst mit dem Anziehen der Klemmschraube 36 vergrößert sich dann der Abstand der beiden Bügelschenkelenden zueinander so weit, daß sie sich auf die Ränder des Durchbruches auflegen und dadurch ein Herausfallen der Anordnung aus dem Durchbruch verhindern.

Beim in Fig. 4 dargestellten Stand der Technik ist diese Montage von außen einschließlich dem dort dargestellten Bügel 124 nicht möglich, vielmehr muß dort zunächst das dort dargestellte Bauteil 112 mit demontiertem Bügel 124 von außen durch einen entsprechenden Durchbruch in einer dünnen Wand 114 hindurchgeschoben werden, wonach dann erst von innen der Bügel 124 aufgesetzt und eine Klemmschraube 36 durch eine Bohrung im Steg des Klemmbügels 124 hindurchgesteckt und in einer Gewindebohrung im Vorsprung 120 eingeschraubt werden kann. Eine derartige Anordnung erlaubt keine Vormontage des Bügels auf dem Ansatz mittels der Klemmschraube und erlaubt auch nicht, wenn gewünscht, eine Blindmontage, wie sie im folgenden noch näher erläutert werden wird.

Fig. 3 läßt in einer Ansicht von oben (bzw. von hinten) gemäß Fig. 1 die Flanschfläche 34 des Scharnierteils 12 erkennen, von dem der Vorsprung 20 ausgeht, mit seinen Seitenflächen 30 und 26, die durch eine Schrägfläche 28 miteinander in Verbindung stehen. Zur Aufnahme der Klemmschraube 36 dient hier eine Gewindebohrung 38, in die eine Kopfschraube 36, wie bereits beschrieben, eingeschraubt werden kann, und dabei den in Fig. 2 erkennbaren Bügel mit seinem Kopf in Eingriff nimmt.

Bei den Ausführungsformen gemäß Fig. 1 bis 3 ist der Vorsprung lediglich zur Befestigungszwecken vorgesehen. Jedoch kann der Vorsprung auch Funktionsteile eines Verschlusses enthalten, wie es beispielsweise in Fig. 6 bis 8 dargestellt ist. So umfaßt dort das Bauteil 212 ein Schlüsselschild mit einer Flanschfläche 234 und einen durch einen entsprechenden Durchbruch im Türblatt 214 hindurchreichenden Ansatz 220, der einen Schloßkasten darstellen mag, aus dem ein Fallenriegel 40 austritt, der sich hinter die Rückfläche eines Gehäuses 216 oder dgl. legt und dabei eine im Gehäuse 216 gebildete Öffnung durch eine Klappe oder Tür 214 verschließt. Hier wird der Vorsprung 220, bzw. der "Schloßkasten" 220 von mehreren, in diesem Falle zwei Bügeln 224, 225 umgriffen, die sich, siehe Fig. 7, eine Ansicht von links auf die Anordnung gemäß Fig. 6, mit ihren Stirnflächen auf sich gegenüberliegenden Randbereichen 242, 243 abstützen. Auch hier sind im Stegbereich des U-förmigen Bügels angeordnete Durchbrüche vorgesehen, durch die (in diesem Falle zwei) Klemmschrauben 236, 237 hindurchgeführt und in entsprechenden Gewindebohrungen im den Schloßkasten bildenden Vorsprung 220 aufgenommen sind. Dadurch, daß die beiden Bügel 224, 225 durch eine Stegverbindung 44 miteinander in Verbindung stehen, ergibt sich eine größere Stabilität der Gesamtanordnung und Vereinfachung der Montage. Man könnte auch einen einheitlichen im Querschnitt U-förmigen Bügel verwenden, der beide Längswände des Vorsprungs 220 in voller Länge umgreift. Indem jedoch der Ausschnitt 150 ausgestanzt wird, wodurch die beiden miteinander durch den verbleibenden Steg verbundenen kurzen Bügel 224, 225 entstehen, wird weniger Druckkraft benötigt, um die Bügelschenkel auseinander zu drücken, zumal dann, wenn man die Materialdicke stärker wählt, um den Zähnen 46 größere Stabilität zu geben.

Die bei der hier dargestellten Ausführungsform gemäß Fig. 6 dargestellten Spitzen oder Zähne 46 gehen von den Stirnflächen der Bügelschenkel aus, welche Zähne oder Spitzen 46 sich - ggf. durch eine isolierende Lackschicht od. dgl. hindurchtretend - in das Material der dünnen Wand 214 eingraben und beispielsweise dann, wenn die dünne Wand aus Blech besteht, zwischen diesem Blech einerseits und dem aus Metall bestehenden Bügel 224 andererseits eine elektrische Verbindung herstellen, die wiederum über die Schraubverbindung 236 eine elektrische Verbindung zum ebenfalls aus Metall bestehenden Schloßkasten 220 herstellen mögen. Ein mit dem Schloßkasten 22 in Verbindung stehender Betätigungsschlüssel könnte daher selbst dann nicht unter ein gefährliches, von dem Potential des Schrankes abweichendes elektrisches Potential gelangen, wenn beispielsweise im Inneren des Schaltschrankes herausgebrochener, unter Spannung stehender Draht den aus Metall bestehenden Schloßkasten 220 berührt.

Bei der Bewegung der Beine der beiden Bügel 224, 225 aus ihrer in Fig. 8 erkennbaren vormontierten Stellung, in der ein Hindurchschieben der Gesamtanordnung durch den Durchbruch im Türblatt 214 möglich ist, in die in Fig. 7 dargestellte verklemmte Stellung, mit der die Stimflächen des Bügels 224 entlang der Schrägfläche 228 nach außen gedrückt wurden, wird somit gleichzeitig eine Befestigung und Erdung des Verschlusses erreicht.

Falls das Material des Bügels 224 relativ stark und dadurch besonders steif ist, was für schwere Ausführungsformen und fürden Erdungskontakt von Wichtigkeit sein kann, ist es günstig, die Fußbereiche 48 der Schenkel der U-förmigen Bügel gezielt nahe dem Steg zu schwächen, beispielsweise durch einen Einschnitt 50 oder Durchbrüche 150 oder Schwächungslinie 350, um so an dieser Stelle ein Ausbiegen an dieser Stelle zu erleichtern.

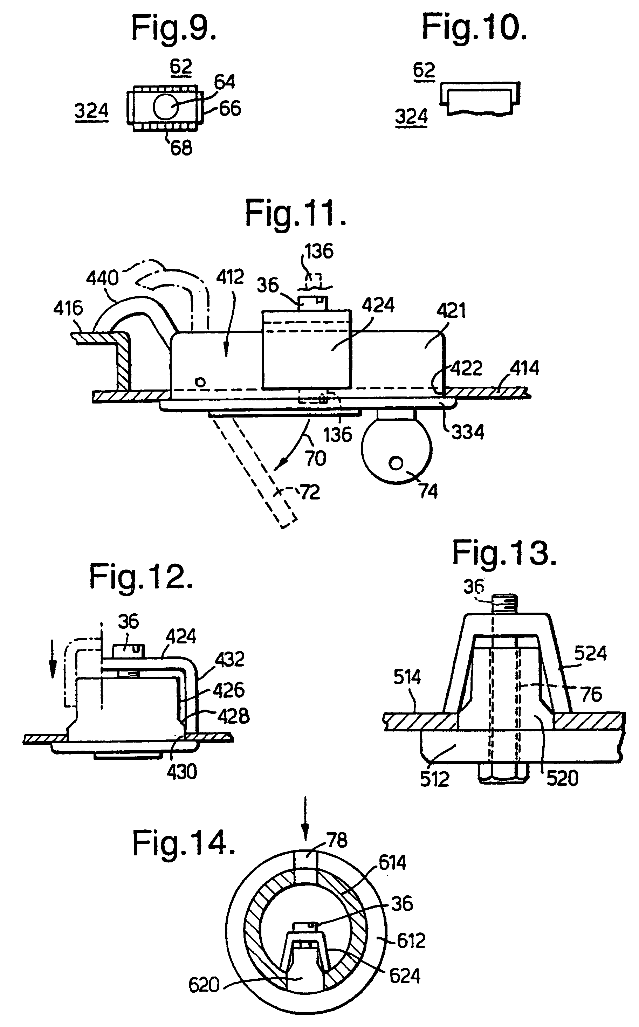

Es gibt Anwendungsfälle, wo die genaue Lage des Befestigungspunktes des Bauteils 312, wie beispielsweise in der Fig. 5, einstellbar sein soll, beispielsweise zu dem Zweck, den Abstand zwischen Türblatt 14 einerseits und dem Rahmen 16 andererseits mit Hilfe des Scharniers 318 einzustellen. Dies läßt sich dadurch erreichen, daß man dem Durchbruch 322 im Türblatt 314 senkrecht zur Achse 52 des Scharniers eine größere Ausdehnung gibt, als es der entsprechenden Ausdehnung des Ansatzes 320 entspricht. Der U-förmige Bügel erstreckt sich dann parallel zur Richtung der Achse 52, sitzt also mit seinen Stimflächen auf den direkt an den Vorsprung 320 angrenzenden Durchbruchrändem auf und hält dadurch das Bauteil 312 bezüglich des Türblatts od. dgl. 314 in einer bestimmten Entfernung von der Achse 52 fest. Gemäß Fig. 9 wird von den Stimflächen eines blechartigen Metallstanzteils 62 eine Zahnung gebildet, das auf einem vom Bauteil 312 gebildeten Vorsprung 58 sitzt und diesen kappenartig umschließt, wobei die Befestigungsschraube 336 durch einen entsprechenden Durchbruch 64 im Kappenteil hindurchgeführt werden kann. Seitenwände 66 verhindern eine Bewegung der Kappe quer zur Richtung dieser Seitenwände, während die mit den Zahnungen 56 versehenen Seitenwände 68 quer zu ihrer Richtung eine Bewegung verhindern. Die Zahnung selbst dient dann als arretierende Auflage auf der Innenfläche 54 des Türblatts 314, ähnlich wie die Zahnung bei 46 in Fig. 6. Auch hier wird mit der Befestigung gleichzeitig auch bei Bedarf eine Erdung erreicht.

Fig. 11 läßt in einer Seitenansicht einen Schwenkhebelverschluß 412 erkennen, der mit seinem Verschlußkörper durch einen entsprechenden Durchbruch in einem Türblatt 414 bis zum Anliegen an einem Flansch 434 hindurchgesteckt wurde. Mittels eines Bügels 424, der sich beim Anziehen der Klemmschraube 436 gemäß Fig. 12 nach außen spreizt, wird das Gehäuse des Schlosses 421 in diesem Durchbruch des Türblatts 414 festgehalten. In verriegelter Stellung ergreift ein Zungenteil 440 einen abgekanteten Rahmen 416 und hält dadurch das Türblatt 414 in geschlossener Stellung an diesem Rahmen 416 fest. Soll die Tür 414 geöffnet werden, wird der Schwenkhebel des Schwenkhebelverschlusses nach außen geschwenkt, siehe Pfeil 70, wodurch die Zunge 440 den Rahmenbereich des Rahmens 416 freigibt. In der eingeschwenkten Stellung kann der Schwenkhebel 72 verriegelt werden, wozu beispielsweise ein Zylinderschloß in den Schloßkasten 421, betätigbar durch einen Schlüssel 74, dienen könnte.

Bei den bisher beschriebenen Ausführungsformen war der Zugang zur Klemmschraube jeweils von der Hinterseite gegeben. Bei der in Fig. 13 dargestellten Ausführungsform ist dies abgeändert dadurch, daß hier der Klemmbügel 524 mit einer Gewindebohrung versehen ist, während das Bauteil 512 und der von dem Bauteil 512 ausgehende Vorsprung 520 eine Durchgangsbohrung 76 aufweisen, die bis an die Außenfläche des Bauteils 512 reicht und so einen Zugang zu dem Kopf der Schraube 36 ermöglicht. Bei dieser Ausführung kann eine vollständige Blindmontage erfolgen, indem zunächst das Bauteil 512 mit seinem Vorsprung 520 und dem zurückgezogenen Bügel 524 einschließlich vormontiertem Bolzen 36 in eine entsprechende Durchbruchöffnung im Türblatt oder Wand 512 eingeschoben wird, woraufhin dann die Schraube angezogen werden kann und eine Verklemmung durch Aufspreizung des Bügels 524 in der bereits geschilderten Weise erfolgt.

Eine derartige Blindmontage ist besonders sinnvoll bei dünnen Wänden, deren Rückseite nicht zugänglich ist, z. B. zu einer Rohrform gebogen sind, wie es Fig. 14 in einer Querschnittsansicht zeigt. Dort wird beispeilsweise ein ringförmiges Bauteil 612 mit Hilfe eines durch einen Durchbruch in der Bohrwandung ragenden Vorsprungs 620 auf einer zu einem Rohr gebogenen dünnen Wand 614 gehalten, wobei eine Klemmschraube 36 einen Bügel 624 gegen die inneren Randflächen der rohrförmigen dünnen Wand 614 legt. Der Kopf der Schraube 36 kann, wie in Fig. 13, von außen zugänglich sein, oder aber es wird, wie hier, mit Hilfe einer gegenüberliegenden, im rohrförmigen Gebilde angeordneten kleinen Bohrung 76 ein Zugang geschaffen, durch die z.B. ein Schraubenzieher hindurchgeführt werden könnte.

Blindmontage ist auch günstig bei kleinen Schränken, da diese bei der Montage mit der Verschlußtür nach oben auf den Boden gelegt werden. Blindmontage der Scharniere und/oder Verschlüsse der nach oben weisenden Türaußenfläche ist besonders bequem. Umgekehrt wäre ein Öffnen (d.h. Anheben) der Tür, um Zugang zu der Türinnenfläche zu erhalten, besonders unbequem. Blindmontage macht letzteres entbehrlich.

Ein nach Blindmontage eines Verschlusses nach außen weisender Kopf der Klemmschraube kann im übrigen aus Sicherheitsgründen so angeordnet werden, daß er bei gesichertem Verschluß nicht sichtbar bzw. zugänglich ist. Z.B. könnte der Schwenkhebel 72 des in Fig. 11 dargestellten Verschlusses den Kopf einer umgekehrt (blind) montierten Schraube 136 abdecken.

### Gewerbliche Auswertbarkeit

Die Erfindung ist z.B. im Schaltschrankbau gewerblich auswertbar.

## Patentansprüche

1. Klemmbügelbefestigung (10) zur Montage von Scharnieren, Verschlüssen od. dgl. Bauteilen (12) in einer dünnen Wand (14), wie Blechschranktür oder -gehäuse, wobei ein von dem zu befestigenden Bauteil (12) ausgehender Vorsprung (20), der einen in der dünnen Wand gebildeten Durchbruch (22) durchragt, von einem auf zwei sich gegenüberliegenden Randbereichen (42, 43) des Durchbruchs (22) sich abstützenden Bügel (24) umgriffen ist, wobei der Bügel (24) *einen im wesentlichen rechteckigen Umfang aufweist und* mittels Klemmschraube (36) od. dgl. in Richtung auf den Vorsprung (20) gezogen wird, **dadurch gekennzeichnet, daß** der den Durchbruch (22) durchragende Teil (20) des Bauteils (12) auf zwei sich gegenüberliegenden, vom Bügel (24) umgriffenen Flächen (26) jeweils einen das zugehörige Bügelende aufnehmenden Rücksprung bildet, dessen Fläche in Richtung auf das Bauteil (12) über eine Schrägfläche (28) in eine an der Durchbruchleibung (22) anliegenden Fläche (30) übergeht, die annähernd zur Außenfläche (32) des im Rücksprung liegenden Bügelschenkels des Bügels fluchtet.

2. Klemmbügelbefestigung nach Anspruch 1, **dadurch gekennzeichnet, daß** die an der Durchbruchleibung (24) anliegende Fläche des Vorsprungs (20) senkrecht zur Ebene der dünnen Wand (14) eine Erstreckung aufweist, die annähernd der Stärke der dünnen Wand (14) entspricht.

3. Klemmbügelbefestigung nach Anspruch 1 oder 2, **dadurch gekennzeichnet, daß** das Bauteil (12) eine an der Außenfläche der dünnen Wand anliegende Flanschfläche (34) bildet, von der der Vorsprung (20) vorspringt.

4. Klemmbügelbefestigung nach Anspruch 1, 2 oder 3, **dadurch gekennzeichnet, daß** der Vorsprung (20) Funktionsteile eines Verschlusses enthält (220).

5. Klemmbügelbefestigung nach einem der Ansprüche 1 - 4, **dadurch gekennzeichnet, daß** von den Stimflächen der Bügeischenkel Zähne oder Spitzen (46, 68) ausgehen, die sich in das Material der dünnen Wand (214) eingraben.

6. Klemmbügelbefestigung nach einem der Ansprüche 1 - 5, **dadurch gekennzeichnet, daß** zwei oder mehr, durch einen Steg einstückig miteinander verbundene Bügel (224, 225) vorgesehen sind, die das langgestreckte Gehäuse eines Schwenkhebelverschlusses (220) od. dgl. umgreifen.

7. Klemmbügelbefestigung nach einem der Ansprüche 1 - 5, **dadurch gekennzeichnet, daß** der Bügel (324) die Form einer Kappe (62) aufweist, der den Vorsprung (320) derart umgreift, daß zwei sich gegenüberliegende Seitenwände der Kappe an ihren Stirnflächen Zahnungen derart tragen, daß diese sich auf den Randbereich des Durchbruches (322) legen, der eine längere Erstreckung aufweist, als die Erstreckung des Vorsprungs (320), wobei durch Druckkontakt eine gegenseitige Verschiebung zwischen Bügel (324) bzw. Vorsprung (322) einerseits und der dünnen Wand (314) nicht zugelassen wird, diese aber bei Lockerung des Kontaktes ermöglicht wird.

8. Klemmbügelbefestigung nach Anspruch 7, **dadurch gekennzeichnet, daß** senkrecht zu den mit den Spitzen versehenen Seitenwänden Haltewände vorgesehen sind, die eine Verschiebung der Kappe bezüglich des Vorsprungs in einer quer zu ihrer Erstreckung liegenden Richtung unterdrücken.

9. Klemmbügelbefestigung nach Anspruch 8, **dadurch gekennzeichnet, daß** das Bauteil ein Scharnierteil ist und die durch Kontaktlockerung mögliche Verschiebung parallel oder senkrecht zur Schamierachse verläuft.

10. Klemmbügelbefestigung nach Anspruch 9, **dadurch gekennzeichnet, daß** das Bauteil Teil eines Scharniers ist, dessen eines Schamierteil mit einem (oder mehreren) Ansatz mit Verschiebemöglichkeit parallel zur Schamierachse, und dessen anderes Scharnierteil mit Verschiebemöglichkeit senkrecht dazu versehen ist.

11. Klemmbügelbefestigung nach einem der Ansprüche 1 bis 10, **dadurch gekennzeichnet, daß** der Bügel (24) in seinem Stegbereich eine Durchgangsbohrung und das Bauteil (12) eine Gewindebohrung für die Klemmschraube (36) aufweisen.

12. Klemmbügelbefestigung nach einem der Ansprüche 1 - 10, **dadurch gekennzeichnet, daß** der Bügel (524) eine Gewindebohrung und das Bauteil (512) eine Durchgangsbohrung (76) für die Klemmschraube (36) aufweisen.

13. Klemmbügelbefestigung nach Anspruch 1, **dadurch gekennzeichnet, daß** die dünne Wand eine Rohrwandung (614) ist.

14. Klemmbügelbefestigung nach Anspruch 13, **dadurch gekennzeichnet, daß** die Rohrwandung gegenüberliegend zu der Klemmbefestigung einen Durchbruch (78) oder Schlitz als Zugangsmöglichkeit eines Werkzeuges zur Klemmschraube (36) aufweist.

15. Klemmbügelbefestigung nach Anspruch 11, **dadurch gekennzeichnet, daß** das Bauteil (12) einen Verschluß, wie Hebelverschluß darstellt, und daß der Betätigungskopf für die Klemmschraube (36) bei verschlossenem Verschluß abgedeckt ist, z.B. bei einem Hebelverschluß durch den Hebel.

## Claims

1. Clamping bracket fastening (10) for mounting hinges, locks or similar components (12) onto a thin wall (14), such as a sheet metal cupboard door or housing, where a projection (20) extending from the component (12) to be fastened, which projects through an aperture (22) formed in the thin wall, is grasped by a bracket (24) supported on two opposite edge areas (42, 43) of the aperture (22), said bracket (24) having a substantially rectangular periphery and being pulled by means of a clamping screw (36) or the like in the direction of the projection (20), **characterised in that** the part (20) of the component (12) projecting through the aperture (22) forms on each of two opposite surfaces (26) grasped by the bracket (24) a recess which receives the relevant bracket end, the surface of which recess in the direction of the component (12) turns via an inclined surface (28) into a surface (30) lying in contact with the interior side of the aperture (22) and which is approximately in alignment with the exterior surface (32) of the leg of the bracket located in the recess.

2. Clamping bracket fastening as claimed in Claim 1, **characterised in that** the surface of the projection (20) lying in contact with the interior surface of the aperture (24) incorporates an extension vertical to the plane of the thin wall (14), said extension corresponding approximately to the thickness of the thin wall (14).

3. Clamping bracket fastening as claimed in Claim 1 or 2, **characterised in that** the component (12) forms a flange surface (34) which lies in contact with the exterior surface of the thin wall, from which the projection (20) projects.

4. Clamping bracket fastening as claimed in Claim 1, 2 or 3, **characterised in that** the projection (20) incorporates functional parts of a lock (220).

5. Clamping bracket fastening as claimed in any one of Claims 1 - 4, **characterised in that** teeth or points (46, 68) extend from the end faces of the bracket legs, which dig into the material of the thin wall (214).

6. Clamping bracket fastening as claimed in any one of Claims 1 - 5, **characterised in that** two or more brackets (224, 225) which are integrally connected to one another by a crosspiece are provided, which grasp the elongated housing of a swivelling lever lock (220) or the like.

7. Clamping bracket fastening as claimed in any one of Claims 1 - 5, **characterised in that** the bracket (324) has the form of a cap (62) which grasps the projection (320) in such a manner that two opposite side walls of the cap carry toothing on their end faces such that this comes to lie on the edge area of the aperture (322) having a longer extension than the extension of the projection (320), where mutual displacement between the bracket (324) or projection (322) on the one hand and the thin wall (314) is prevented by means of pressure contact, but is allowed when the contact is loosened.

8. Clamping bracket fastening as claimed in Claim 7, **characterised in that** retaining walls are provided vertical to the sidewalls provided with the points, which suppress displacement of the cap with respect to the projection in a transverse direction to the extension thereof.

9. Clamping bracket fastening as claimed in Claim 8, **characterised in that** the component is a hinge part and the displacement made possible by loosening the contact runs parallel or vertical to the axis of the hinge.

10. Clamping bracket fastening as claimed in Claim 9, **characterised in that** the component is part of a hinge of which one part has one (or more) projection(s) displaceable parallel to the axis of the hinge, and the other part of which is displaceable vertical thereto.

11. Clamping bracket fastening as claimed in any one of Claims 1 - 10, **characterised in that** the bracket (24) has a through-bore in the area of its crosspiece and component (12) has a threaded bore for the clamping screw (36).

12. Clamping bracket fastening as claimed in any one of Claims 1 - 10, **characterised in that** the bracket (524) has a threaded bore and the component (512) has a through-bore (76) for the clamping screw (36).

13. Clamping bracket fastening as claimed in Claim 1, **characterised in that** the thin wall is a pipe wall (614).

14. Clamping bracket fastening as claimed in Claim 13, **characterised in that** the pipe wall opposite the clamping fastening has an aperture (78) or a slot as a means of access to the clamping screw (36) for a tool.

15. Clamping bracket fastening as claimed in Claim 11, **characterised in that** the component (12) constitutes a lock such as a lever lock and that the actuating head for the clamping screw (36) is covered when the lock is locked, e.g. by the lever in the case of a lever lock.

## Revendications

1. Fixation à étrier de serrage (10) pour le montage de charnières, de serrures ou des pièces analogues (12) dans une paroi mince (14) telle qu'une porte ou un châssis d'armoire en tôle, une partie en saille (20) partant de la pièce (12) à fixer, qui passe dans une ouverture (22) formée dans la paroi mince, étant entourée par un étrier (24) s'appuyant sur deux zones périphériques (42, 43) opposées de l'ouverture (22), l'étrier (24) présentant un périmètre essentiellement rectangulaire et étant tiré vers la partie en saillie (20) au moyen de vis de serrage ou analogue (36), **caractérisée en ce que** la partie (20) de la pièce (12) passant dans l'ouverture (22) forme une partie en retrait sur deux surfaces (26) opposées entourées par l'étrier (24), recevant à chaque fois une extrémité correspondante de l'étrier, la surface de ladite partie en retrait, dans le sens vers la pièce (12), se transformant via une surface inclinée (28) en une surface (30) placée contre la partie interne de l'ouverture (22) qui est quasiment alignée par rapport à la surface extérieure (32) de la branche de l'étrier située dans la partie en retrait.

2. Fixation à étrier de serrage selon la revendication 1, **caractérisée en ce que** la surface de la partie en saillie (20) placée contre la partie interne (22) de l'ouverture présente, perpendiculairement par rapport au plan de la paroi mince (14), une étendue qui correspond environ à l'épaisseur de la paroi mince (14).

3. Fixation à étrier de serrage selon la revendication 1 ou 2, **caractérisée en ce que** la pièce (12) forme une surface à bride (34), placée contre la surface externe de la paroi mince, dont part la partie en saillie (20).

4. Fixation à étrier de serrage selon la revendication 1, 2 ou 3, **caractérisée en ce que** la partie en saillie (20) comporte des pièces fonctionnelles d'une serrure (220).

5. Fixation à étrier de serrage selon l'une quelconque des revendications 1 à 4, **caractérisée en ce que** des dents ou des pointes (46,68) partent des faces frontales des branches de l'étrier, qui s'enfoncent dans le matériau de la paroi mince (214).

6. Fixation à étrier de serrage selon l'une quelconque des revendications 1 à 5, **caractérisée en ce qu'**on a prévu deux ou plusieurs étriers (224, 225) raccordés par une âme de manière à former une seule pièce, qui entourent le bâti allongé d'un dispositif de fermeture à levier pivotant (220) ou analogue.

7. Fixation à étrier de serrage selon l'une quelconque des revendications 1 à 5, **caractérisée en ce que** l'étrier (324) présente la forme d'un capuchon (62) qui entoure la partie en saillie (320) de telle manière que deux parois latérales opposées du capuchon présentent sur leur face frontale des dents de telle manière que celles-ci se placent sur la périphérie de l'ouverture (322) qui présente une étendue plus longue que l'étendue de la partie en saillie (320), un déplacement relatif entre l'étrier (324) ou la pièce en saillie (322) d'une part et la paroi mince (314) n'étant pas autorisé par un contact de pression, mais ce déplacement étant rendu possible lorsque le contact est relâché.

8. Fixation à étrier de serrage selon la revendication 7, **caractérisée en ce qu'**on a prévu des parois de fixation perpendiculaires aux parois latérales pourvues des pointes, qui empêchent un déplacement du capuchon par rapport à la partie en saillie dans un sens transversal par rapport à son étendue.

9. Fixation à étrier de serrage selon la revendication 8, **caractérisée en ce que** la pièce est une partie de charnière et le déplacement rendu possible en relâchant le contact se fait parallèlement ou perpendiculairement par rapport à l'axe de la charnière.

10. Fixation à étrier de serrage selon la revendication 9, **caractérisée en ce que** la pièce fait partie d'une charnière dont une partie de charnière est pourvue d'un (ou de plusieurs) embout(s) avec une possibilité de déplacement parallèle à l'axe de la charnière et dont l'autre partie de charnière est pourvue d'une possibilité de déplacement perpendiculaire à celui-ci.

11. Fixation à étrier de serrage selon l'une quelconque des revendications 1 à 10, **caractérisée en ce que** l'étrier (24) présente dans une zone de l'âme un passage et la pièce (12) un trou taraudé pour la vis de serrage (36).

12. Fixation à étrier de serrage selon l'une quelconque des revendications 1 à 10, **caractérisée en ce que** l'étrier (524) présente un trou taraudé et la pièce (512) un trou (76) pour la vis de serrage (36).

13. Fixation à étrier de serrage selon la revendication 1, **caractérisée en ce que** la paroi mince est une paroi de tube (614).

14. Fixation à étrier de serrage selon la revendication 13, **caractérisée en ce que** la paroi de tube présente, face à la fixation de serrage, une ouverture (78) ou une fente comme possibilité d'accès pour un outil à la vis de serrage (36).

15. Fixation à étrier de serrage selon la revendication 11, **caractérisée en ce que** la pièce (12) est une serrure, telle qu'une serrure à levier et la tête de la vis de serrage (36) est recouverte lorsque la serrure est fermée, par exemple dans le cas d'une serrure à levier par le levier.
